Europäisches Patentamt

European Patent Office

Office européen des brevets

(19)

(11) Publication number: **0 448 294 A1**

# (12) EUROPEAN PATENT APPLICATION

(21) Application number: **91302194.5**

(22) Date of filing: **14.03.91**

(51) Int. Cl.⁵: **C08K 3/00, C08L 67/02**

(30) Priority: **23.03.90 GB 9006589**

(43) Date of publication of application:
**25.09.91 Bulletin 91/39**

(84) Designated Contracting States:
**DE ES FR GB IT SE**

(71) Applicant: **BRITISH UNITED SHOE MACHINERY LIMITED**
**PO Box 88 Ross Walk**
**Belgrave Leicester LE4 5BX (GB)**
Applicant: **BOSTIK LIMITED**
**Ulverscroft Works Ulverscroft Road**
**Leicester LE4 6BW (GB)**

(72) Inventor: **Agger, Reginald Thomas**
**5 Rearsby Road**
**Queniborough, Leicestershire LE7 8HD (GB)**
Inventor: **Arnold, Brian**
**43 Orchard Way**
**Syston, Leicestershire (GB)**

(74) Representative: **Atkinson, Eric**
**c/o British United Shoe Machinery Limited**
**P.O. Box 88 Ross Walk**
**Belgrave Leicester LE4 5BX (GB)**

(54) **Reinforcing/stiffening material.**

(57)    A reinforcing/stiffening material comprises a binder in admixture with a filler. The binder is a polyhexamethylene adipate having a molecular weight of at least 10000, preferably at least 30000, and a viscosity measured at 100°C of at least 30 Pa.s, preferably at least 600 Pa.s.

The material is particularly suitable for reinforcing/stiffening toe and/or heel end portions of shoes.

EP 0 448 294 A1

# REINFORCING/STIFFENING MATERIAL

This invention is concerned with a reinforcing/stiffening material which comprises a binder in admixture with a filler, especially but not exclusively for use in reinforcing/stiffening toe and/or heel end portions of shoes; such material may thus be used for application direct to toe and heel end portions of shoes, or for the manufacture of reinforcing/stiffening components for shoes or for the manufacture of sheet material from which reinforcing/stiffening components may be cut.

There is described in EP-A 0 183 912 a reinforcing/stiffening material which consists of 30 to 80% by weight of filler and 70 to 20% by weight of binder, the particles of filler being formed entirely or at least on their surface of plastic and having a grain size distribution of 50 to 500 micron, and the binder being thermoplastic with adhesive properties in the temperature range 50 to 80°C. As used in connection with the filler, the term "plastic" is said to refer to those plastics which, on the basis of their melt properties alone, are scarcely amenable, if at all, to processing into forms with a large surface area using powder technology methods. Particularly suitable plastics are said to include hard PVC particles and copolymers of vinyl chloride and an alpha-olefine or of styrene and butadiene or propenenitrile, butadiene and styrene. Suitable binders are said to include polycaprolactones, elastomeric polyurethenes, modified polyalkenes and ionomers.

In EP-A 0 349 140 is described an improved reinforcing/stiffening material which comprises an E-polycaprolactone binder in admixture with a filler. The filler is pulverised fuel ash and the mixture comprises from 50 to 95% by weight of polycaprolactone, from 5 to 45% by weight of pulverised fuel ash and from 0 to 20% by weight of other fillers and/or diluents.

Materials of the type proposed in EP-A 0 183 912 demonstrate a number of disadvantages some of which are overcome by the materials proposed in EP-A 0 349 140. In particular, it has been found that it takes approximately ten seconds to form a bond between the reinforcing/stiffening material or component and the shoe components to which it is to be bonded, under typical shoe-making conditions, where the binder is a commercially available polycaprolactone, having a molecular weight in the region of 50,000. It would be advantageous in shoe-making if this bonding time could be reduced.

In addition, it has been found that where the reinforcing/stiffening materials are skived, which is an essential process in shoe-making, an undesirable amount of dust may be generated. This is often the case where the filler is an inorganic filler, especially if the material has not been consolidated in the course of its manufacture and is apparently due to the filler not being sufficiently bonded into the binder matrix. Consolidation has been found also to enhance the stiffness of the material, presumably for the same reasons.

Attempts have been made to overcome the problems outlined above. For example there are described in EP-A 0 323 700 a tough heat-formable sheet material and also mouldable articles produced therefrom, said material comprising a reinforcing/stiffening component in the form of a high molecular weight synthetic resin, more particularly a highly crystalline polyesterurethane formed by reacting polyester chains with isocyanate. Still more particularly the preferred stiffening component is based on polyhexamethylene adipate.

Polyhexamethylene adipate has until now, however, only been produced with molecular weights not exceeding 5000, in the absence of any chain extension achieved by the use of isocyanate. It is of course a disadvantage of this polyesterurethane that its manufacture involves the use of isocyanate, since such use gives rise to the objections that they may be deemed to be hazardous, they can cause discoloration of polymeric products and there may be a risk of the production of harmful by-products when they are burnt.

It is an object of the present invention to provide a reinforcing/stiffening material which is particularly suitable for use in the footwear industry and by the use of which the above disadvantages are reduced or substantially eliminated.

This object is resolved in accordance with the present invention, in a reinforcing/stiffening material which comprises a binder in admixture with a filler, in that the binder is polyhexamethylene adipate having a molecular weight of at least 10 000 and a viscosity measured at 100°C of at least 30 Pa.s.

It is preferred that the polyhexamethylene adipate has a molecular weight of at least 30000 and a viscosity measured at 100°C of at least 600 Pa.s.

The material of the present invention suitably contains up to 50% by volume, preferably up to 40% by volume, of filler, based on the volume of the material. The filler may be any of the known inorganic or organic fillers, e.g. pulverised fuel ash, wood flour, almond shell grain, olive stone grain and hard plastics fillers such as hard PVC particles.

The material of the present invention is particularly suitable for manufacture by a powder process in which a mixture of binder and filler in powder form is deposited as a layer between two supporting layers, for example between two layers of scrim, in particular lightweight scrim, or between one layer of scrim, in particular a lightweight scrim, and one layer of lightweight non-woven material, for example a non-woven lining material, and then fused. Alternatively, the mixture of binder and filler in powder form may be deposited directly onto the shoe upper in the desired configuration and fused in situ. Such direct deposition can suitably be carried out using known powder deposition apparatus, e.g. as described in GB-A 2 171 033. The mixture of binder and filler in accordance with the invention may also be pre-compounded and pelletised and then be extruded directly.

Where the material of the present invention is prepared by a powder process, either by deposition between two supporting layers or by direct deposition, it is preferred to use a mixture of binder and filler in which the particle size distribution of the filler and the binder are similar. Particularly good results are obtained when both the density and the particle size distribution of the filler and the binder are similar. If there is a significant mismatch between the particle size distribution of the two components, then this can lead to problems in the dispensing of the powder mixture and to a tendency for the filler to separate out from the finished product.

The material of the present invention may also comprise from 0 to 20% by weight of other fillers and/or diluents, which may be added to reduce the cost of the material or to modify its properties.

The preferred polyhexamethylene adipate powder used in carrying out the present invention has been obtained from Bostik Ltd under the designation "HM5189". This product is described and claimed in co-pending U.K. Patent Application No. 9006597.0 of even date herewith in the name of Bostik Ltd.

The invention will now be further described with reference to the following specific examples.

Example 1

This Example used Bostik HM5189AE, which is a polyhexamethylene adipate in powder form having a molecular weight calculated at approximately 30 000, a viscosity of approximately 800 PA.s. at 100°C and a particle size range of 0 to 600 micron. ("Bostik" is a Registered Trade Mark.)

The powder was mixed in the following ratios by weight:

```
Polyhexamethylene adipate               60
Pulverised fuel ash having a particle
size range of 0 to 400 micron           30
Ethylene vinyl acetate                  10.
```

The mixture was dispersed over a lightweight non-woven material and a second, similar, non-woven material was then placed on top. The laminate was heated to 125°C, consolidated and cooled. The finished product had a weight of 0.91 kg/m$^2$ and a density of 800 kg/m$^3$. The modulus at 20°C was 380 MPa.

A Dome Test (DLC) was carried out and gave a result of 7.28 kg (16lb) for a collapsing load.

The sheet material was cut into counter shapes and edge-skived. Satisfactory skiving was achieved, with very little skiving dust being produced.

Bonding to an AQUILINE material, which is a typical non-woven shoe upper lining material, at 150°C for 8 seconds at a pressure of 137.93 kPa (20 psi) gave a bond strength of 0.146 N/m. (AQUILINE is a Registered Trade Mark.)

Example 2 (Comparison)

Commercially availably polycaprolactone sold by Interox under the designation CAPA 656, which is the powder grade of granulate CAPA 650 and has a molecular weight in a range of 49000 to 52000, was mixed with pulverised fuel ash and ethylene vinyl acetate in the same ratios as in Example 1 above, and was processed under identical conditions as in Example 1 above. The finished product had a weight of 0.90 kg/m$^2$ and a density of 740 kg/m$^3$. The modulus at 20°C was 248 MPa.

The Dome Test (DLC) gave a result of 5 kg (11 1b) for a collapsing load.

The sheet material was cut into counter shapes and edge-skived. Considerable amounts of skiving dust were produced.

Bonding to an AQUILINE material at 150°C for 8 seconds at 137.93 kPa (20 psi) gave a bond strength of 0.112 N/m.

Example 3

A sample of the polyhexamethylene adipate used in Example 1 was mixed with almond shell grain having a particle size range of 300 to 600 micron (a mesh size of 25 to 52) in the ratio of 60:40 by weight of polyester to almond shell. The mixture was consolidated in a press at 100°C to give a sheet having a density of 1150 kg/m³ and a modulus at 20°C of 658 MPa.

When cut and edge-skived as in Example 1, the material demonstrated good skiving properties, with very little skiving dust being produced.

Under similar bonding conditions to Example 1, similar bond strengths were produced.

Example 4

A sample of the polyhexamethylene adipate used in Example 1 was mixed with olive stone grain having a particle size range of 120 to 250 micron (a mesh size of 60 to 120) in the ratio of 60:40 by weight of polyester to olive stone. The mixture was consolidated in a press at 100°C to give a sheet 1.21 mm thick, having a density of 1090 kg/m³ and a modulus at 20°C of 658 MPa.

When cut and edge-skived as in Example 1, the material demonstrated good skiving properties, with very little skiving dust being produced.

Under similar bonding conditions to Example 1, similar bond strengths were produced.

The materials produced according to Examples 1, 3 and 4 could all be processed, without the further addition of adhesive, on conventional backpart moulding equipment to produce well-shaped firm backparts.

Wear trials have demonstrated excellent shape-retaining properties in wear.

## Claims

1. A reinforcing/stiffening material which comprises a binder in admixture with a filler, characterised in that the binder is a polyhexamethylene adipate having a molecular weight of at least 10000 and a viscosity measured at 100°C of at least 30 Pa.s.

2. A material according to Claim 1 characterised in that the polyhexamethylene adipate has a molecular weight of at least 30000 and a viscosity measured at 100°C of at least 600 Pa.s.

3. A material according to Claim 1 or Claim 2 characterised in that it contains up to 50% by volume of filler, based on the volume of the material.

4. A material according to Claim 3 characterised in that it contains up to 40% by volume of filler, based on the volume of the material.

5. A material according to any of the preceding claims characterised in that the filler is pulverised fuel ash, wood flour, almond shell grain, olive stone grain or a hard plastics filler.

EP 0 448 294 A1

European Patent Office

**EUROPEAN SEARCH REPORT**

Application Number

EP 91 30 2194

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2436670 (JACQUES P.R. CHAMPON)<br>* page 2, lines 18 - 29; claims * | 1-5 | C08K3/00<br>C08L67/02 |
| X | GB-A-2008163 (TOKYO EIZAI LAB. CO., LTD)<br>* page 2, lines 25 - 38; claims * | 1-5 | |
| X | CHEMICAL ABSTRACTS, vol. 106, no. 14, 06 April 1987<br>Columbus, Ohio, USA<br>page 376; ref. no. 107950U; & JP-A-61 218 507 (U NITIKA LTD. ; SHOFU PRODUCTS INC.) 29-09-1986<br>* abstract * | 1-5 | |
| | | | TECHNICAL FIELDS SEARCHED (Int. Cl.5 )<br><br>C08K<br>C08L |

The present search report has been drawn up for all claims

| Place of search | Date of completion of the search | Examiner |
|---|---|---|
| THE HAGUE | 26 JUNE 1991 | DE LOS ARCOS Y E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

5